# EUROPÄISCHE PATENTSCHRIFT

(11) **EP 1 070 372 B1**
(45) Veröffentlichungstag und Bekanntmachung des Hinweises auf die Patenterteilung: **03.07.2002**
(21) Anmeldenummer: 99924748.9
(22) Anmeldetag: 26.03.1999
(51) Int. Cl.: H02B 1/06

(54) **BEDIENFELD EINES MIT GERÄTEEINSCHÜBEN BESTÜCKTEN NIEDERSPANNUNGS-SCHALTFELDES**
CONTROL PANEL OF A LOW-VOLTAGE SWITCHGEAR CUBICLE FITTED WITH WITHDRAWABLE UNITS
PANNEAU DE COMMANDE D'UNE ARMOIRE ELECTRIQUE BASSE TENSION EQUIPEE D'UNITES EXTRACTIBLES

(30) Priorität: 08.04.1998 DE 19816580
(43) Veröffentlichungstag der Anmeldung: 24.01.2001
(73) Patentinhaber: SIEMENS AKTIENGESELLSCHAFT, 80333 München (DE)
(72) Erfinder: SCHMIDT, Mario, D-04275 Leipzig (DE); GOHLICKE, Kay, D-04209 Leipzig (DE)
(86) Internationale Anmeldenummer: DE9900996
(87) Internationale Veröffentlichungsnummer: WO9953581

(56) Entgegenhaltungen:
- EP-A- 0 780 940
- DE-U- 29 514 997
- US-A- 3 743 892

## Beschreibung

Die Erfindung betrifft ein Bedienfeld eines Niederspannungs-Schaltfeldes, bestehend aus Bedienpulten mehrerer übereinander angeordneter Geräteeinschübe und einer das Schaltfeld frontseitig abschließenden Abdeckung, wie Tür oder Frontwand, die mit einem den Bedienpulten der betreffenden Geräteeinschübe vorgelagerten gemeinsamen Fenster versehen ist.

Ein Bedienfeld der genannten Art ist z. B. durch die DE-Firmendruckschrift SIEMENS: "Niederspannungs-Schaltanlage 8PU.011", Best.-Nr A19100-E74-A91, Druckschriften-Nr. 174265 PA 04875., Ausgabe April 1987, bekanntgeworden. Das den Bedienpulten der Einschübe vorgelagerte Fenster ist dabei mit einer Schauscheibe versehen. Eine Bedienungsperson kann sich daher bei allen Geräteeinschüben von der Schaltstellung überzeugen und Anzeigeinstrumente ablesen. Dagegen ist es erforderlich, die Abdeckung des Schaltfeldes zu öffnen, um durch eine Betätigung von Bedienungsorganen, wie Drucktaster und/oder Schalter, die Schaltstellung zu verändern. Dem guten Schutz der Geräteeinschübe durch die Schauscheibe steht daher eine gewisse Erschwernis bei der Bedienung der Geräteeinschübe im Schaltfeld gegenüber.

Es ist für vergleichbare Zwecke bekannt, jedem Geräteeinschub eine eigene, als Tür ausgebildete Abdeckung zuzuordnen und das Bedienpult des betreffenden Geräteeinschubes in dieser Tür anzuordnen. Dies erfordert es jedoch, biegsame Leitungen zur Verbindung der in der Tür befindlichen Bedienelemente, wie Drucktaster und Schalter sowie Anzeigeinstrumente und Meldeleuchten, mit den Geräten des Geräteeinschubes vorzusehen. Ferner wird zur Betätigung eines Hauptschalters eine mechanische Türkupplung benötigt. In diesem Fall steht Vorteilen in der Bedienbarkeit der Geräteeinschübe ein nicht unbeträchtlich erhöhter Aufwand an Bauteilen und eine gewisse Erhöhung der Störanfälligkeit gegenüber (DE 1 690 324 A1).

Der Erfindung liegt ausgehend von einem Bedienfeld der eingangs genannten Art die Aufgabe zugrunde, unter Beibehaltung eines gemeinsamen Fensters für alle Geräteeinschübe die Bedienbarkeit' zu verbessern.

Diese Aufgabe wird gemäß der Erfindung dadurch gelöst, daß das Fenster als freie Öffnung für den direkten Zugang zu den Bedienpulten ausgebildet ist und daß ein zwischen benachbarten Geräteeinschüben verbleibender Zwischenraum durch an der Abdeckung befestigte und das Fenster örtlich verschließende Blendstücke überdeckt ist. Die Benutzung der Blendstücke hat den Vorteil, daß das Fenster der Abdeckung an beliebigen Stellen örtlich verschlossen werden kann und somit problemlos beliebige Kombinationen von Geräteeinschüben mit unterschiedlicher Bauhöhe verwirklicht werden können.

Die Erfindung unterscheidet sich grundsätzlich von weiteren bekannten Geräteanordnungen nach der DE 295 14 997 U1 sowie der US 3 743 892. Gemäß DE 295 14 997 U1 wird eine Schaltschranktür mit einem Ausbruch versehen, der die Höhe von mehreren Einschüben, Einsätzen o.ä. aufweist. Jedem dieser Einschübe usw. wird ein Paneelelement als Befestigungstafel für Befehls-, Melde- und Anzeigegeräte zugeordnet. Damit werden dem Benutzer nicht die Bedienpulte der Einschübe selbst zugänglich gemacht, sondern diese werden mittels zusätzlicher Elemente bedient, die in den Paneelen montiert sind. Hiervon sieht die Erfindung im Interesse geringer Kosten und zuverlässiger Funktionen bewusst ab. Die bekannten Paneele werden stumpf aneinanderstoßend derart montiert, dass sie den Ausbruch der Schaltschranktür vollständig abdecken.

Demgegenüber sieht die Erfindung eine Kombination von Blendstücken für Zwischenräume und Verschlussstücken für nicht bestückte Bereiche des Schaltschrankes vor, die aber nicht Träger irgendwelcher Elemente sind, die in Verbindung mit darunter befindlichen Geräten stehen.

Nach der erwähnten US 3,743,892 ragen Bedienelemente von Sicherungsautomaten bei geschlossener Abdeckung durch Öffnungen der Abdeckung und sind dadurch unmittelbar zugänglich. In der Abdeckung sind einzelne Durchtrittsöffnungen für jeden Sicherungsautomat vorgesehen, wobei diese Durchtrittsöffnungen durch ausbrechbare Trennstege voneinander getrennt sind. Damit sind die Trennstege Bestandteil der Abdeckung und werden bei Bedarf entfernt, während umgekehrt nach der vorliegenden Erfindung die Öffnung in der Anlagentür ohne Unterteilung hergestellt und Blendstücke nach Bedarf eingefügt werden.

Im Rahmen einer vorteilhaften Ausgestaltung der Erfindung können nahe den Rändern des Fensters in der Abdeckung Aufnahmeöffnungen für Befestigungselemente der Blendstücke angeordnet sein, wobei die Aufnahmeöffnungen in einem Abstand entsprechend dem Teilungsmaß der kleinsten Bauhöhe der in dem Schaltfeld zu verwendenden Geräteeinschübe angeordnet sind. Hierdurch ist sichergestellt, daß die zur Anordnung der Geräteeinschübe passende Position der Blendstücke bei der Montage ohne besondere Aufmerksamkeit einzuhalten ist.

Für die Handhabung der Blendstücke erweist es sich als zweckmäßig, wenn die Befestigungselemente als an die Blendstücke angeformte und nach Größe und Abstand an die Aufnahmeöffnungen angepaßte Zapfen ausgebildet sind. In diesem Zusammenhang kann die Montage der Blendstücke noch dadurch erleichtert werden, daß die zapfenartigen Befestigungselemente als in den Aufnahmeöffnungen selbsttätig verrastende und durch eine Lösekraft freizugebende Pilzkopfzapfen ausgebildet sind. Die Möglichkeit der Freigabe der Blendstucke erweist sich als vorteilhaft bei allen Arbeiten im Zusammenhang mit einer Änderung der Ausrüstung bzw. Bestückung eines Schaltfeldes. Zapfen dieser Art sind für Zwecke der Schnellmontage in anderem Zusammenhang bereits bekannt.

Im Rahmen der Erfindung können die Befestigungselemente durch einen parallel zur Längsrichtung des Fensters verlaufenden Einschnitt in zwei Teilstücke geteilt sind. Hierdurch wird erreicht, daß die Blendstücke in der Längsrichtung des Fensters maßgenau zu positionieren sind, weil die Eigenfederung der Befestigungselemente im wesentlichen nur quer zur Längsrichtung des Fensters wirkt.

Häufig ist es nicht erforderlich, den gesamten Einbauraum eines Schaltfeldes mit Geräteeinschüben zu bestücken. Dabei können die unterschiedlichsten Anordnungen auftreten, z.B. ein Block von Geräteeinschüben oder mehrere solcher Blöcke über die Höhe des Einbauraumes verteilt. Hierbei empfiehlt es sich nach einer Weiterbildung der Erfindung, einen Abschnitt des Fensters, der zu einem nicht mit einem Geräteeinschub bestückten Abschnitt des Schaltfeldes gehört, durch ein Verschlußstück zu verschließen und die Blendstücke an ihrer dem Inneren des Schaltfeldes zugewandten Seite mit Rastnasen zur Halterung der Verschlußstücke zu versehen.

Die Erfindung wird im folgenden anhand der in den Figuren dargestellten Ausführungsbeispiele näher erläutert.

Die Figur 1 zeigt eine frontseitige Ansicht eines Teiles einer mehrfeldrigen Niederspannungs-Schaltanlage mit einer Kombination von Geräteeinschüben in zwei Bauhöhen.

In der Figur 2 ist ein Teil eines Schaltfeldes der Schaltanlage nach der Figur 1 in einer perspektivischen Darstellung gezeigt, wobei vier Geräteeinschübe gleicher Bauhöhe vorgesehen sind.

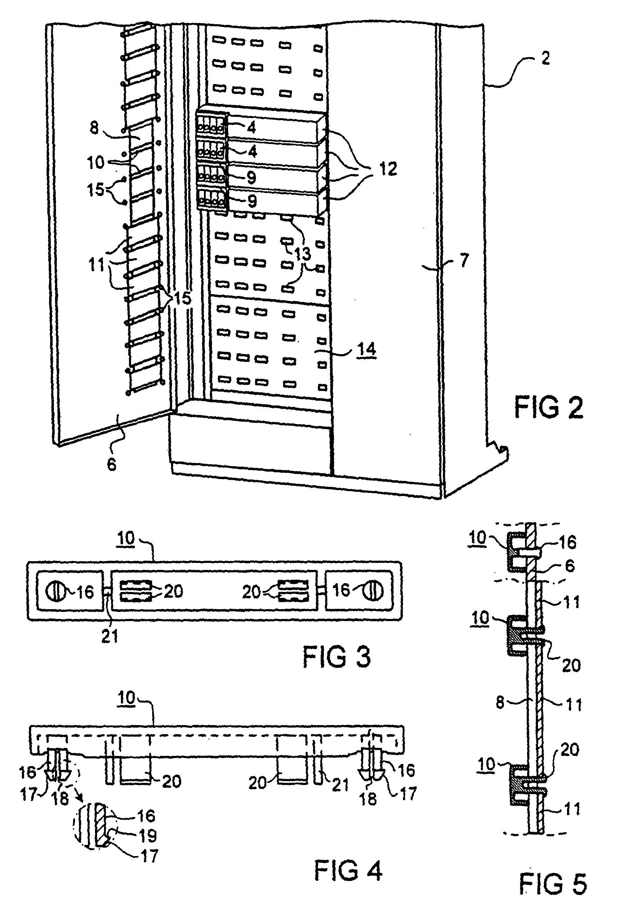

Ein Blendstück ist in der Figur 3 mit Blick auf seine dem Inneren des Schaltfeldes zugewandten Seite gezeigt.

Die Figur 4 zeigt das Blendstück gemäß der Figur 3 in einer Seitenansicht.

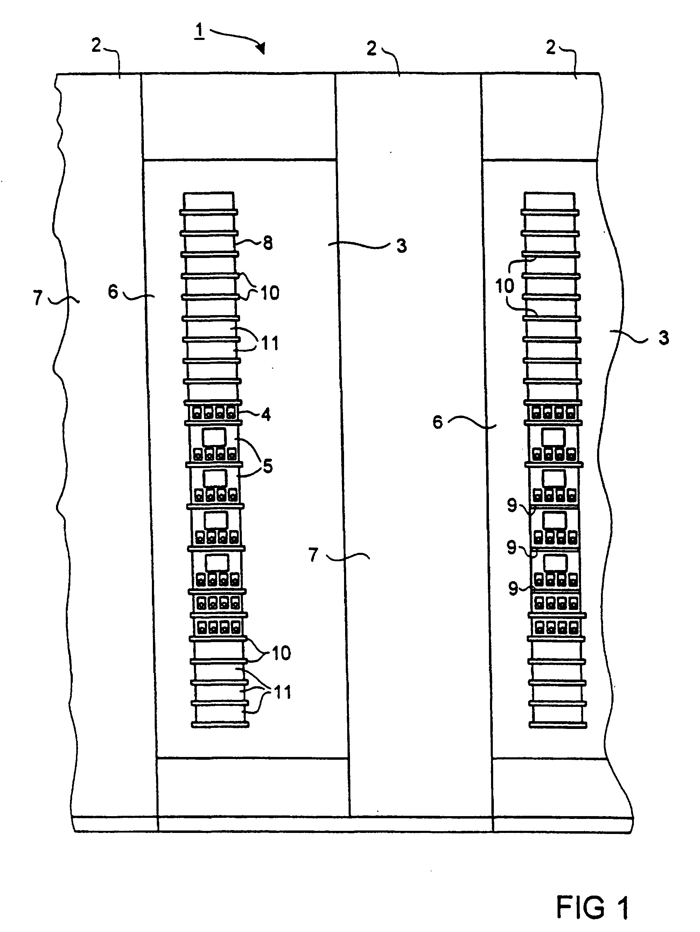

Einen Schnitt durch eine Abdeckung eines Schaltfeldes nach den Figuren 1 oder 2 im Bereich des Fensters mit gleichfalls geschnitten dargestellten Blendstücken zeigt die Figur 5.

Eine in der Figur 1 teilweise gezeigte Niederspannungs-Schaltanlage 1 weist mehrere Schaltfelder 2 auf, von denen die außengelegenen abgebrochen dargestellt sind. Die Bedienfelder 3 der Schaltfelder 2 umfassen Bedienpulte 4 und 5 von in der Figur 1 nicht sichtbaren Geräteeinschüben (vgl. Figur 2), die durch ein Fenster 8 in einer frontseitigen Abdeckung 6 zugänglich sind. Die Abdeckung 6 kann in bekannter Weise als eine um Scharniere schwenkbare Tür oder als abnehmbare Frontwand ausgebildet sein. In dem gezeigten Beispiel erstreckt sich die Abdeckung 6 nur über einen Teil der Breite und der Höhe der Schaltfelder 2, während sich seitlich neben der Abdeckung 6 eine weitere Abdeckung 7 der genannten Art zum Abschluß eines Kabelanschlußraumes befindet.

In dem Beispiel gemäß der Figur 1 sind Geräteeinschübe in zwei unterschiedlichen Bauhöhen vorgesehen, wobei die Bedienpulte 4 zu der kleinsten Bauhöhe gehören, die das Teilungsmaß der Anordnung bildet. Die Bedienpulte 5 gehören zu Geräteeinschüben der nächstgrößeren Bauhöhe, die entsprechend dem doppelten Teilungsmaß bemessen ist.

Zwischen den Bedienpulten 4 bzw. 4 und 5 verbleiben Zwischenräume 9, die durch lösbare Blendstücke 10 verschlossen sind. In der Figur 1 sind im rechten Feld 2 einige der Blendstücke 10 fortgelassen, um die Zwischenräume 9 sichtbar zu machen. Wie man erkennt, sind auch oberhalb und unterhalb des mit Geräteeinschüben bestückten Bereiches des Schaltfeldes 2 Blendstücken 10 vorgesehen. Diese Anordnung dient zum Verschließen der betreffenden Abschnitte des Fensters 8 durch Verschlußstücke 11, wie anhand der Figuren 2 bis 5 noch näher erläutert wird.

Aus der Figur 2 ist näher ersichtlich, daß Geräteeinschübe 12, zu denen die Bedienpulte 4 gehören, in bekannter Weise als steckbare Gerätekombinationen ausgebildet sind, zu deren Aufnahme in dem Schaltfeld 2 ein mit Durchtrittsöffnungen 13 für Steckkontakte versehener Steckschienenkanal 14 angeordnet ist. Die als Tür ausgebildete und geöffnet gezeigte Abdeckung 6 ist beidseitig des Fensters 8 mit Aufnahmeöffnungen 15 für Befestigungselemente der Blendstücke 10 versehen. Der vertikale Abstand der Aufnahmeöffnungen 15 entspricht dabei dem erwähnten Teilungsmaß, das in der beschriebenen Weise an die geringste vorkommende Bauhöhe von Geräteeinschüben angepaßt ist. Gleichfalls erkennbar sind in der Figur 2 Verschlußstücke 11, die das Fenster 8 in den Bereichen verschließen, in denen das Schaltfeld 2 nicht mit Geräteeinschüben bestückt ist.

Die Gestaltung der Blendstücke 10 geht näher aus den Figuren 3 und 4 hervor. Es handelt sich dabei um vorzugsweise aus thermoplastischen Kunststoff hergestellte Teile von schmaler, rechteckiger Grundform, die an ihrer dem Inneren des Schaltfeldes 2 zugewandten Seite Befestigungselemente 16 in der Gestalt pilzkopfförmiger Zapfen zum Eingreifen in die Aufnahmeöffnungen 15 besitzen. Die Befestigungselemente 16 sind nach Länge und Durchmesser so bemessen, daß sie sich in die Aufnahmeöffnungen 15 unter Druck einführen lassen, wobei Endnasen 17 an der Innenseite der Abdeckung 6 anliegen, um eine praktisch spielfreie Anlage der Blendstücke 10 an der Abdeckung 6 zu gewährleisten.

Obwohl es unterschiedliche bekannte Gestaltungen für pilzkopfartige Befestigungselemente gibt, erweisen sich für die Zwecke Erfindung die in den Figuren 3 und 4 gezeigten Befestigungselemente 16 mit nur je einem Einschnitt 18 als besonders geeignet, weil aufgrund der Ausrichtung dieser Einschnitte in der Längsrichtung des Fensters 8 eine Eigenfederung der Befestigungselemente 16 im wesentlichen nur quer zum Fenster 8 wirkt. In der Längsrichtung des Fensters 8 werden die Blendstücke 10 dagegen recht genau auf die Aufnahmeöffnungen 15 in der Abdeckung 6 ausgerichtet. Hierdurch wird eine sichere und spielarme Erfassung der erwähnten Verschlußstücke 11 erreicht.

Die Endnasen 17 der Befestigungselemente 16 können in bekannter Weise rechtwinklig hinterschnitten sein. Dies führt zu einem festen jedoch durch ein Werkzeug lösbaren Sitz der Blendstücke in der Abdeckung 6. Ist es dagegen erwünscht, daß die Blendstücke 10 lediglich durch Aufbringen einer erhöhten Lösekraft abgenommen werden können, um die Anordnung der Blendstücke an eine veränderte Bstückung mit Geräteinschüben anzupassen, so empfiehlt sich eine Gestaltung der Befestigungselemente entsprechend der vergrößerten Einzelheit in der Figur 4. Wesentlich ist hierbei eine Ausbildung der Hinterschneidung mit einer winkligen Flanke 19.

Als weiteres Merkmal weisen die Blendstücke 10 zwei Paare von Rastnasen 20 auf, die zur Erfassung und Halterung der Verschlußstücke 11 dienen. Seitlich neben den Paaren von Rastnasen 20 angeordnete Anschlagstege 21 begrenzen die Durchbiegung der Rastnasen 20 beim Einsetzen der Verschlußstücke 11.

Das Zusammenwirken der Blendstücke 10 mit der Abdeckung 6 ist in der Figur 5 veranschaulicht. Dabei ist im oberen Teil der Figur 5 ein Schnitt im Bereich eines der Befestigungselemente 16 gezeigt. Das dichte Anliegen des Blendstückes 10 an der Abdeckung 6 und das Hintergreifen der Aufnahmeöffnungen 15 durch die Endnasen 17 sind ersichtlich.

Im unteren Teil der Figur 5 ist ein Schnitt im Bereich eines der Paare von Rastnasen 20 gezeigt. Hier ist erkennbar, wie die Verschlußstücke 11 von den Rastnasen 20 erfaßt und gehalten werden. Das Fenster 8 wird hierdurch örtlich verschlossen.

Vorstehend ist die Erfindung in Verbindung mit einer Niederspannungs-Schaltanlage beschrieben worden. Als Schaltfeld im vorstehenden Sinn sind jedoch auch einzelne oder miteinander kombinierte Schaltschränke zu verstehen. Die Erfindung ist ferner unabhängig davon anwendbar, ob die Abdeckungen der Schaltfelder als schwenkbare Türen oder als abnehmbare Frontwände ausgebildet sind. Gleichfalls ist es ohne Bedeutung, welche Bauart die Geräteeinschübe aufweisen und an welcher Stelle der Frontseite der Geräteeinschübe sich das zugehörige Bedienpult befindet, da es lediglich erforderlich ist, die Position des Fensters in der Abdeckung der veränderten Lage der Bedienpulte anzupassen.

## Patentansprüche

1. Bedienfeld (3) eines Niederspannungs-Schaltfeldes (2), bestehend aus Bedienpulten (4, 5) mehrerer übereinander angeordneter Geräteeinschübe (12) und einer das Schaltfeld (2) frontseitig abschließenden Abdeckung (6), wie Tür oder Frontwand, die mit einem den Bedienpulten (4, 5) der betreffenden Geräteeinschübe (12) vorgelagerten gemeinsamen Fenster (8) versehen ist,
**dadurch gekennzeichnet , daß**
das Fenster (8) als freie Öffnung für den direkten Zugang zu den Bedienpulten (4, 5) ausgebildet ist und daß ein zwischen benachbarten Geräteeinschüben (12) verbleibender Zwischenraum (9) durch an der Abdeckung (6) befestigte und das Fenster (8) örtlich verschließende Blendstücke (10) überdeckt ist.

2. Bedienfeld nach Anspruch 1,
**dadurch gekennzeichnet , daß**
nahe den Rändern des Fensters (8) in der Abdeckung (6) Aufnahmeöffnungen (15) für Befestigungselemente (16) der Blendstücke (10) angeordnet sind und daß die Aufnahmeöffnungen (15) in einem Abstand entsprechend dem Teilungsmaß der kleinsten Bauhöhe der in dem Schaltfeld (2) zu verwendenden Geräteeinschübe (12) angeordnet sind.

3. Bedienfeld nach Anspruch 2,
**dadurch gekennzeichnet, daß**
die Befestigungselemente (16) als an die Blendstücke (10) angeformte und nach Größe und Abstand an die AufnahmeÖffnungen (15) angepaßte Zapfen ausgebildet sind.

4. Bedienfeld nach Anspruch 3,
**dadurch gekennzeichnet , daß**
die Befestigungselemente (16) als in den Aufnahmeöffnungen (15) selbsttätig verrastende und durch eine Lösekraft freizugebende Pilzkopfzapfen ausgebildet sind.

5. Bedienfeld nach Anspruch 4,
**dadurch gekennzeichnet , daß**
die Befestigungselemente (16) durch einen parallel zur Längsrichtung des Fensters (8) verlaufenden Einschnitt (18) in zwei Teilstücke geteilt sind.

6. Bedienfeld nach einem der vorangehenden Ansprüche,
**dadurch gekennzeichnet , daß**
ein Abschnitt des Fensters (8), der zu einem nicht mit einem Geräteeinschub (12) bestückten Abschnitt des Schaltfeldes (2) gehört, durch ein Verschlußstück (11) verschließbar ist und daß die Blendstücke (10) an ihrer dem Inneren des Schaltfeldes (2) zugewandten Seite mit Rastnasen (20) zur Halterung der Verschlußstücke (11) versehen sind.

## Claims

1. Control panel (3) of a low-voltage switch panel (2), comprising operators' panels (4, 5) of a number of withdrawable units (12) arranged one above the other, and a cover (6), such as a door or front wall, which closes the front of the switch panel (2) and is provided with a joint window (8) mounted in front of the operators' panels (4, 5) of the relevant withdrawable units (12),
**characterized in that**
the window (8) is in the form of a free opening for direct access to the operators' panels (4, 5), and **in that** an intermediate space (9) which remains between adjacent withdrawable units (12) is covered by panel pieces (10) which are attached to the cover (6) and close the window (8) in places.

2. Control panel according to Claim 1,
**characterized in that**
retaining openings (15) for attachment elements (16) for the panel pieces (10) are arranged close to the edges of the window (8) in the cover (6), and **in that** the retaining openings (15) are arranged at a distance corresponding to the subdivision size of the smallest physical height of the withdrawable units (12) which are to be used in the switch panel (2).

3. Control panel according to Claim 2,
**characterized in that**
the attachment elements (16) are in the form of pins, which are integrally formed on the panel pieces (10) and whose size and separation are matched to the retaining openings (15).

4. Control panel according to Claim 3,
**characterized in that**
the attachment elements are in the form of mushroom-headed pins which automatically latch in the retaining openings (15) and can be released by means of a release force.

5. Control panel according to Claim 4,
**characterized in that**
the attachment elements (16) are split into two elements by means of an incision (18) running parallel to the longitudinal direction of the window (8).

6. Control panel according to one of the preceding claims,
**characterized in that**
a section of the window (8) which is associated with a section of the switch panel (2) fitted with a withdrawable unit (12) can be closed by means of a closure piece (11), and **in that** the panel pieces (10) are provided, on their side facing the interior of the switch panel (2), with latching tabs (20) for holding the closure pieces (11).

## Revendications

1. Panneau (3) de commande d'une armoire (2) électrique basse tension constitué de pupitres (4,5) de commande de plusieurs unités (12) extractibles superposées et d'un recouvrement (6) fermant du côté frontal l'armoire (2) électrique, comme d'une porte ou d'une paroi avant, qui est muni d'une fenêtre (8) commune montée en avant des pupitres (4,5) de commande des unités (12) extractibles concernées,
**caractérisé en ce que** la fenêtre (8) est constituée en ouverture dégagée pour l'accès direct aux pupitres (4,5) de commande et **en ce qu'**un espace (9) intermédiaire subsistant entre des unités (12) extractibles voisines est recouvert d'une pièce (10) formant écran, qui est fixée au recouvrement (6) et qui ferme localement la fenêtre (8).

2. Panneau de commande suivant la revendication 1,
**caractérisé en ce que**, près des bords de la fenêtre (8), il est prévu dans le recouvrement (6) des ouvertures (15) de réception d'éléments (16) de fixation des pièces (10) formant écran et **en ce que** les ouvertures (15) de réception sont disposées à un intervalle correspondant au pas de la hauteur la plus petite des unités (12) extractibles utilisées dans l'armoire (2) électrique.

3. Panneau de commande suivant la revendication 2,
**caractérisé en ce que** les éléments (16) de fixation sont constitués sous la forme de tenons issus des pièces (10) formant écran et adaptés en forme et en intervalle aux ouvertures (15) de réception.

4. Panneau de commande suivant la revendication 3,
**caractérisé en ce que** les éléments (16) de fixation sont constitués sous la forme de tenons en forme de tête de champignon, s'encliquetant automatiquement dans les ouvertures (15) de réception et se dégageant par une force de dégagement.

5. Panneau de commande suivant la revendication 4,
**caractérisé en ce que** les éléments (16) de fixation sont subdivisés en deux parties par une entaille (18) s'étendant parallèlement à la direction longitudinale de la fenêtre (8).

6. Panneau de commande suivant l'une des revendications précédentes,
**caractérisé en ce qu'**une partie de la fenêtre (8), qui appartient à une partie de l'armoire (2) électrique qui n'est pas munie d'une unité (12) extractible, peut être fermée par une pièce (11) de fermeture et **en ce que** les pièces (10) formant écran sont munies, du côté tourné vers l'intérieur de l'armoire (2) électrique, de becs (20) d'encliquetage destinés à maintenir les pièces (11) de fermeture.
